(19) **Europäisches Patentamt European Patent Office Office européen des brevets**

(11) **EP 4 554 832 B1**

(12) **EUROPEAN PATENT SPECIFICATION**

(45) Date of publication and mention of the grant of the patent:
**06.05.2026 Bulletin 2026/19**

(21) Application number: **22741300.2**

(22) Date of filing: **11.07.2022**

(51) International Patent Classification (IPC):
**B60W 40/12** (2012.01)      **B60W 50/00** (2006.01)

(52) Cooperative Patent Classification (CPC):
**B60W 40/12;** B60W 2050/0026; B60W 2050/0088;
B60W 2300/12; B60W 2520/105; B60W 2520/125;
B60W 2520/28; B60W 2530/10; B60W 2556/50

(86) International application number:
**PCT/EP2022/069341**

(87) International publication number:
**WO 2024/012655 (18.01.2024 Gazette 2024/03)**

(54) **IMPROVED ESTIMATION OF EFFECTIVE WHEEL ROLLING RADIUS**

VERBESSERTE SCHÄTZUNG DES EFFEKTIVEN RADROLLRADIUS

ESTIMATION AMÉLIORÉE DU RAYON DE ROULEMENT EFFECTIF DES ROUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.05.2025 Bulletin 2025/21**

(73) Proprietor: **VOLVO TRUCK CORPORATION**
**405 08 Göteborg (SE)**

(72) Inventors:
• **VU, Michael**
  **418 32 Göteborg (SE)**
• **RYDSTRÖM, Mats**
  **427 39 Billdal (SE)**
• **JONASSON, Mats**
  **433 49 Partille (SE)**

(74) Representative: **Ström & Gulliksson AB**
**P.O. Box 4188**
**203 13 Malmö (SE)**

(56) References cited:
EP-A1- 3 809 340      WO-A1-2012/127139
DE-A1- 102017 116 248      DE-B3- 102019 214 815
US-A1- 2022 153 070

**Description**

TECHNICAL FIELD

The present disclosure relates to methods and control units for vehicle motion management (VMM) involving heavy-duty vehicles. The methods are particularly suitable for use with cargo transporting vehicles, such as trucks and semi-trailers. The invention can however also be applied in other types of heavy-duty vehicles, e.g., in construction equipment and in mining vehicles, as well as in cars.

BACKGROUND

Heavy-duty vehicles have traditionally been controlled using torque request signals generated based on the position of an accelerator pedal or brake pedal and sent to motion support devices (MSDs) such as service brakes and propulsion devices over a controller area network (CAN) bus. However, advantages may be obtained by instead controlling the actuators using wheel slip or wheel speed requests sent from a central vehicle controller to the different actuators. This moves the actuator control closer to the wheel end, and therefore allows for a reduced latency and a faster more accurate control of the MSDs. Wheel-slip based MSD control approaches are particularly suitable for use with wheel-end electrical machines in a battery or fuel cell powered heavy-duty vehicle, where motor axle speeds can be accurately controlled at high bandwidth and with low latency. Wheel-slip based vehicle motion management (VMM) and its associated advantages are discussed, e.g., in WO 2017/215751 A1 and also in WO 2021/144010 A1.

Wheel slip based control of heavy-duty vehicles rely on accurate knowledge of the vehicle speed over ground, on the rotation speed of the wheel, and on the effective rolling radius of the wheel.

DE 102017116248 A1 discloses a method for determining the circumference of a wheel by means of a database.

There is a need for robust methods of determining effective wheel rolling radius.

SUMMARY

It is an objective of the present disclosure to provide improved methods for determining effective wheel rolling radius of the wheels on a heavy-duty vehicle. The objective may at least in part be obtained by a method for determining an effective rolling radius of a wheel mounted on a heavy-duty vehicle. The method comprises obtaining a mapping between a vehicle operating state of the heavy-duty vehicle and an effective rolling radius of the wheel. The method also comprises determining a current vehicle operating state of the heavy-duty vehicle and initializing an algorithm for estimating effective rolling radius of the wheel based on the current vehicle operating state and on the mapping. The, once the algorithm reaches a convergence criterion, the method updates the mapping based on the estimated effective rolling radius. This way the convergence time of the algorithm is significantly decreased since the initialization of the algorithm will be better compared to a more arbitrary initialization. An advantage of this is that the effective rolling radius used by the vehicle in, e.g., VMM functions, will be of higher accuracy.

The mapping may be associated with a type of the heavy-duty vehicle, such as the model of the vehicle, its number of axles, etc. However, an even more accurate estimation of effective wheel rolling radius can be obtained if the mapping is a vehicle specific mapping which accounts for properties unique to a given vehicle.

The vehicle operating state preferably comprises at least a current vehicle weight, since this is an important parameter which influences the effective wheel rolling radius. However, the vehicle operating state may also comprise more parameters, such as one or more tyre properties of the wheel.

The algorithm used to determine effective rolling radius may at least partly be based on an acceleration of the vehicle obtained from an inertial measurement unit (IMU) and on an angular acceleration of the wheel obtained from a wheel speed sensor of the heavy-duty vehicle. This allows the effective rolling radius to be determined in most driving scenarios, including in tunnels and in other passageways where travelled distance from a global positioning system, GPS, is not readily available. However, in case accurate information on travelled distance is available, e.g., from GPS, and/or from geographic data. Then the effective wheel rolling radius can also be determined in a reliable manner based on a number of wheel rotations obtained from a wheel speed sensor of the heavy-duty vehicle for the travelled distance. It is appreciated that these two algorithms, and also similar methods for determining effective wheel rolling radius, are relatively slow in convergence, requiring either an extended travelled distance or significant averaging in order to suppress noise and distortion in the measurement date. The present applications reduce the convergence time of the algorithms, since a better initialization is provided based on the mapping.

The mapping may not always be complete in that every possible vehicle state is associated with a respective initialization value for the algorithm. Rather, at least in the beginning, the mapping is likely to lack some information. To alleviate the consequences o an incomplete mapping, the method may comprise initializing the algorithm using interpolation between two or more entries in the mapping.

According to some aspects, the algorithm convergence criterion comprises a condition on rate of change in the estimated effective rolling radius. This is a relatively straight forward convergence criterion which simply comprises monitoring how much the output estimate of effective wheel rolling radius from the algorithm changes over time, and using a threshold or the like to determine when it does not change significantly anymore, at which point in time convergence is declared.

The algorithm convergence criterion may also comprise a condition on execution time of the algorithm. In this case convergence may be declared once the algorithm has executed for a pre-determined period of time, which is a very simple convergence criterion that is also relatively stable.

The updating of the mapping optionally comprises replacing an entry in the mapping associated with the current vehicle operating state by a weighted combination of the entry and the estimated effective rolling radius. Although straight forward replacement is also possible, it may be advantageous to update the entries in the mapping using a weighted combination of the new data point and the previous data point in the mapping. This reduces the impact of corrupt data, and allows the mapping to converge to an accurate mapping over time in a controlled manner. In this manner, interpolation in-between previous values in the mapping may also be used, an also extrapolation in case a current vehicle state is outside of the vehicle states in the mapping.

The method may also comprise monitoring vehicle operating state, and re-initializing the algorithm based on new current vehicle operating state and on the mapping in response to detecting a change in vehicle operating state. This means, e.g., that the data on effective wheel rolling radius used to control the vehicle is updated every time the vehicle operating state changes, such as when the vehicle is loaded or unloaded, or if the tyres on the vehicle are changed.

There is also disclosed herein control units, vehicles, computer programs, computer readable media, and computer program products associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The above, as well as additional objects, features and advantages, will be better understood through the following illustrative and non-limiting detailed description of exemplary embodiments, wherein:

| | |
|---|---|
| Figure 1 | illustrates an example heavy-duty vehicle; |
| Figure 2 | schematically illustrates a wheel; |
| Figure 3 | illustrates an example vehicle control function architecture; |
| Figures 4A-B | are flow charts illustrating methods; |
| Figure 5 | schematically illustrates a control unit; and |
| Figure 6 | shows an example computer program product; |

DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

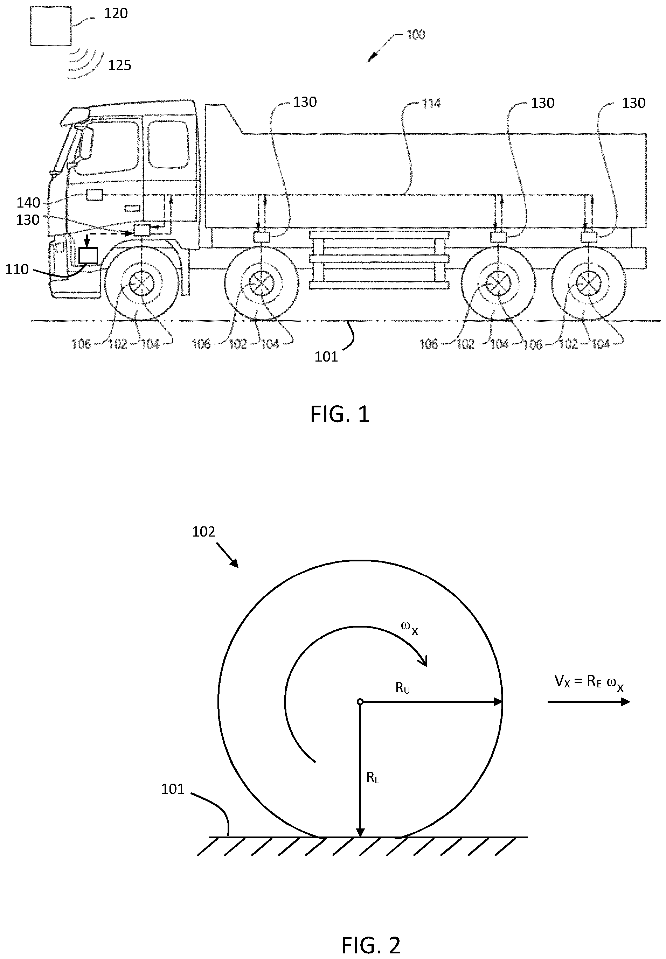

Figure 1 illustrates an example heavy-duty vehicle 100, here in the form of a truck. It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units. A dolly vehicle unit may for instance be used to tow more than one trailer.

The example vehicle 100 comprises a plurality of wheels 102 supporting the vehicle 100 on the road surface 101, wherein at least a subset of the wheels 102 comprises a respective motion support device (MSD) 104, i.e., a torque generating device or other arrangement configured to affect vehicle motion behavior. The MSDs 104 may be arranged for generating a torque on a respective wheel of the vehicle or for both wheels of an axle. The MSD may be a propulsion device, such as an electric machine arranged to e.g., provide a longitudinal wheel force to the wheel(s) of the vehicle 100. Such an electric machine may thus be adapted to generate a propulsion torque as well as to be arranged in a regenerative braking mode for electrically charging a battery (not shown) or other energy storage system(s) of the vehicle 100. The MSDs 104 may also comprise friction brakes such as disc brakes or drum brakes arranged to generate negative torque by the wheel 102 in order to decelerate the vehicle. Herein, the term acceleration is to be construed broadly to encompass both positive acceleration (propulsion) and negative acceleration (braking).

At least some of the wheels 102 on the vehicle 100 are equipped with wheel speed sensors 106. A wheel speed sensor is a sensor which measures the rotation speed of the wheel, e.g., based on a Hall effect sensor, a rotary encoder, or the like. A wheel speed sensor can also be used to determine the number of rotations a wheel undergoes in a given period of time. Wheel speed sensors are generally known and will therefore not be discussed in more detail herein.

A modern heavy-duty vehicle, such as the truck 100, normally comprises sensors to estimate vehicle motion and to monitor the environment in vicinity of the vehicle. Global positioning system (GPS) sensors may be used to position the vehicle and to determine a traveled distance of the vehicle. Electronic maps may also be used for determining a travelled distance, for instance based on a known starting position and destination. An inertial measurement unit (IMU) can be configured to provide information about vehicle motion, such as accelerations in different directions, yaw motion, pitch motion, and vehicle roll. An IMU can be centrally arranged in the vehicle or mounted close to a wheel to determine accelerations specific for that wheel in a reliable and robust manner.

Radar sensors, camera sensors, lidar sensors, and the like can be used to characterize a surrounding environment of the vehicle in a known manner.

These sensors can also be used to determine, e.g., vehicle speed over ground and also accelerations by the vehicle in different directions.

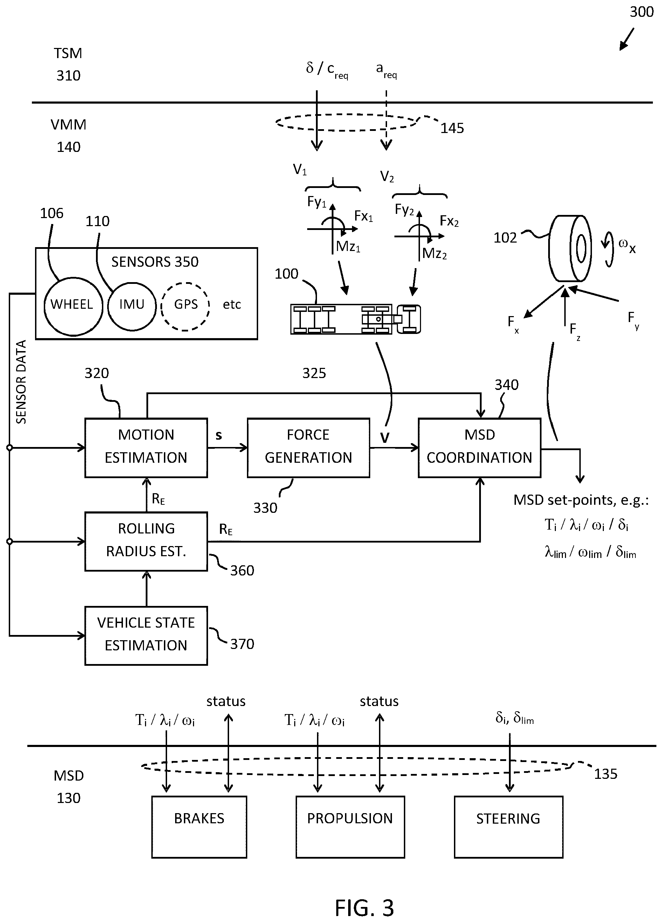

Each MSD 104 is connected to an MSD control unit 130 arranged for controlling various operations of the MSD 104. The MSD control system, i.e., the system of MSD control units, is preferably a decentralized system running on a plurality of separate wheel-end computers, although centralized implementations are also possible. It is furthermore appreciated that some parts of the MSD control system may be implemented on processing circuitry remote from the vehicle, such as on a remote server 120 and/or a remote data processing station accessible from the vehicle via wireless link 125. Each MSD control unit 130 is connected to a VMM system or function 140 of the vehicle 100 via a data bus communication arrangement 114 that can be either wired, wireless or both wired and wireless. Hereby, control signals can be transmitted between the VMM function 140 and the MSD control units 130. The VMM function 140 and the MSD control units 130 will be described in more detail below in connection to Figure 3.

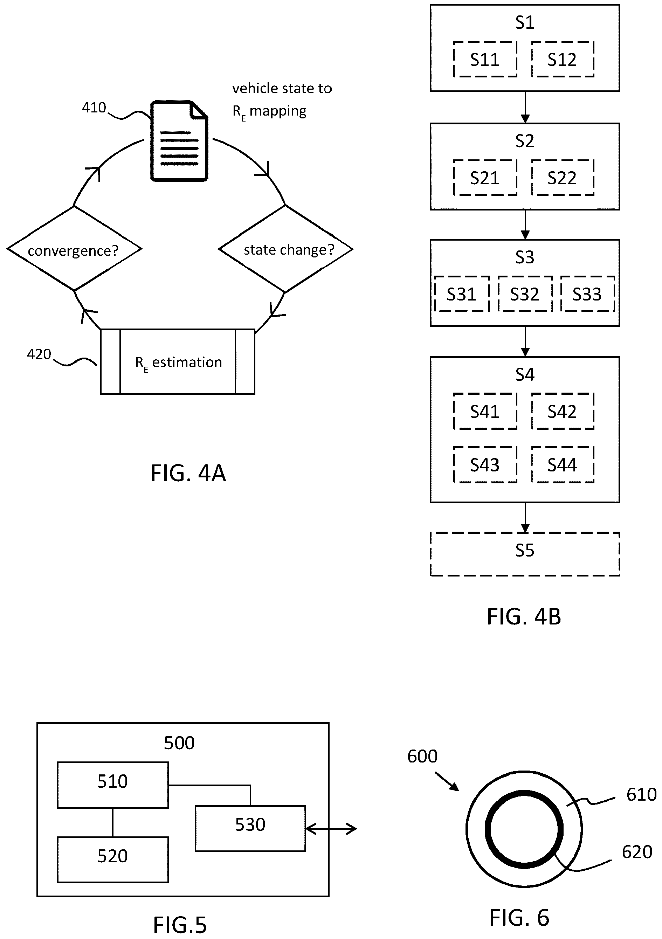

The VMM function 140 as well as the MSD control units 130 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to Figure 5.

Longitudinal wheel slip $\lambda_x$ may, in accordance with SAE J670 (SAE Vehicle Dynamics Standards Committee January 24, 2008) be defined as

$$\lambda_x = \frac{R_E \omega_x - v_x}{max(|R_E \omega_x|, |v_x|)}$$

where $R_E$ is an effective wheel rolling radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel. The VMM function 140 and optionally also the different MSD control units 130 can maintain information on $v_x$ in the reference frame of the wheel, while a wheel speed sensor 106 (such as a Hall effect sensor or rotary encoder) can be used to determine $\omega_x$ (the angular velocity of the wheel).

In order for a wheel (or tyre) to produce a wheel force which affects the motion state of the heavy-duty vehicle, such as an acceleration, slip must occur. For smaller slip values the relationship between slip and generated force is approximately linear, where the proportionality constant is often denoted as the slip stiffness $C_x$ of the tyre. A tyre is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, where $\mu$ is a friction coefficient associated with a road friction condition. The maximum available lateral force for a given wheel slip can be described by the so-called Magic Formula as described in "Tyre and vehicle dynamics", Elsevier Ltd. 2012, ISBN 978-0-08-097016-5, by Hans Pacejka, where wheel slip and tyre force is also discussed in detail.

The effective rolling radius of the wheel $R_E$ is the ratio of the longitudinal velocity $v_x$ of the wheel center to the angular velocity of the wheel $\omega_x$, and it links the angular velocity of the wheel $\omega_x$ to the wheel speed over ground $v_x$ via the wheel slip $\lambda_x$. The effective rolling radius of the wheel is therefore key to determining wheel slip and also places an important role in other VMM functions, for both motion estimation, motion prediction, and motion control. It is a purpose of the present disclosure to provide improved methods and control units for determining effective rolling radius $R_E$ of one or more wheels 102 on a heavy-duty vehicle 100.

Figure 2 schematically illustrates a wheel 102 suitable for use on a heavy-duty vehicle 100. The wheel has an unloaded tyre radius $R_U$ and a loaded tyre radius $R_L$, where the loaded tyre radius is generally smaller than the unloaded tyre radius. The unloaded tyre radius may vary some in dependence of tyre pressure and other tyre properties, but it is normally possible to determine it in a reliable manner from tyre specification alone. The loaded tyre radius $R_L$ is more difficult to determine, since it depends on the weight of the vehicle, i.e., the normal force $F_Z$ acting on the tyre. The effective rolling radius $R_E$ of the wheel 102 is somewhere inbetween the unloaded and the loaded tyre radius.

The present disclosure relates to methods for determining an effective rolling radius $R_E$ of a wheel 102 mounted on a heavy-duty vehicle 100. A problem with most known methods for determining tyre dimensions, such as the effective rolling radius, is the latency involved in the estimation process. This latency is related to the amount of averaging required in the algorithm to reach a sufficient degree of accuracy. For instance, suppose that a travelled distance D (in meters) is measured using a map or some form of GPS-based sensor system, and that the number of wheel rotations $N$ is recorded for some wheel on the vehicle as it travels the distance $D$. These two quantities can be used to determine effective rolling radius, by the relationship

$$R_E = \frac{D}{2\pi N}$$

The longer the distance travelled, the more accurate the estimate of effective rolling radius will be since measurement noise and other transient disturbances will be averaged out. However, travelling a longer distance also takes a longer time, which means that it will take time to generate a reliable estimate of effective rolling radius $R_E$.

The effective rolling radius $R_E$ of a wheel 102 can also be obtained from a comparison of wheel acceleration parallel to the road surface 101 and the angular acceleration of the wheel 102. As long as there is no large amounts of wheel slip,

$$\dot{v}_x \approx R_E \dot{\omega}_x$$

where $\dot{v}_x$ is the longitudinal acceleration of the wheel axle parallel to the road surface (obtained, e.g., from an IMU) and $\dot{\omega}_x$ is the angular acceleration of the wheel (obtained from a wheel speed sensor). However, measurement noise and other disturbances will have to be suppressed by averaging, which again introduces significant latency in the process for estimating effective rolling radius.

With reference to Figure 4A, it is proposed herein to reduce the convergence time of the method for estimating effective rolling radius by maintaining a mapping 410 between vehicle operating state and effective rolling radius. This mapping is used to initialize an algorithm for estimating effective wheel rolling radius. Since the algorithm is now initialized at a value closer to the true effective rolling radius, it will require much less time to converge. Then, once the algorithm has converged, the mapping is updated, thereby building a more accurate mapping over time, leading to even shorter convergence times. The mapping can be customized for a given vehicle type, or even for a specific vehicle, which is an advantage.

The method illustrated in Figure 4A is preferably performed separately for the different wheels on a vehicle, since the different wheels may have different effective rolling radii. In fact, the herein proposed methods may be performed locally, e.g., by the MSD control unit 130, which normally has access to a wheel speed signal from a wheel speed sensor, and can additional information required to execute the algorithm for determining current effective rolling radius from a central VMM controller or other ECU on the vehicle 100.

With reference also to Figure 4B, the method disclosed herein generally comprises obtaining S1 a mapping 410 between vehicle operating state of the heavy-duty vehicle 100 and effective rolling radius $R_E$ of the wheel 102, determining S2 a current vehicle operating state of the heavy-duty vehicle 100, initializing S3 an algorithm 420 for estimating effective rolling radius $R_E$ of the wheel 102 based on the current vehicle operating state and on the mapping 410, and, upon the algorithm 420 reaching a convergence criterion, updating S4 the mapping 410 based on the estimated effective rolling radius $R_E$.

The mapping 410 can, as mentioned above, be associated with a type of the heavy-duty vehicle S11, such that different types of vehicles have different mappings. For instance, a set of mappings can be pre-determined in dependence of vehicle model, its number of axles, the type and number of tyres on each axle, vehicle weight, and so on, and stored on the remote server 120. A suitable mapping selected from the set of mappings can then be loaded onto the vehicle electronic control unit (ECU) at the factory or during vehicle servicing. As the mapping is then periodically updated on a given vehicle, the updates can be transmitted to the server 120, where the "global" vehicle type specific mapping can be updated, thus over time leading to a more accurate mapping which reflects the characteristics of the vehicle type. This update of the global mapping is then preferably made as a weighted combination of the existing mapping and the new mapping, where the existing mapping will be given more weight compared to the new mapping.

Alternatively, or as a complement, the mapping can be a vehicle specific mapping S12, which is specifically tailored to a given vehicle specimen. This mapping will most likely be even more accurate than the vehicle type specific global mapping since it will also be able to account for variation between two vehicles of the same type. As the vehicle 100 is used more and more data will be gathered related to different vehicle states, such as different vehicle cargo loads and the like. Thus, over time, an accurate vehicle specific mapping is constructed, leading to an improved accuracy in the estimation of effective rolling radius, both from an error perspective and from a latency perspective.

The mapping 410 can generally be the same for all wheels on the vehicle 100 or different for each axle, or even or each individual wheel.

The vehicle operating state normally but not necessarily comprises a current vehicle weight S21. The gross cargo weight of a vehicle is the weight of the transported goods, including packaging but normally excluding the weight of the vehicle. The weight of the vehicle without load is normally known to a high degree of accuracy, but the cargo weight is more difficult to determine. It can, however, be estimated in various ways, such as by monitoring bellow pressures in a suspension system of the vehicle 100, or by monitoring how the vehicle responds to tyre force, essentially using the relationship

$$F_x = m\dot{v}_x$$

where $F_x$ is a longitudinal force acting on the vehicle, $m$ is the weight of the vehicle, and $\dot{v}_x$ is the vehicle longitudinal acceleration. Some vehicles are also able to communicate with, e.g., an excavator or cargo transport facility, and obtain information related to a weight of loaded goods from these entities. Other vehicles are able to obtain information about transported goods, from which information the weight of the goods can be obtained. Given information on current vehicle weight, the mapping can be used to translate the weight information into an a-priori estimate of effective rolling radius for a given wheel.

The vehicle operating state optionally also comprises one or more tyre properties of the wheel S22, such as the construction of the tyre, including aspects such as its thread pattern, material composition, dimensions, and the like. The age of the tyre may also have an impact on how the effective rolling radius of the tyre changes with, e.g., vehicle weight. This information can, for instance, be obtained from a remote server 120 via wireless link, or loaded into a memory of the vehicle ECU during service. In this manner tyre wear can also be tracked and used to refine the estimate of effective wheel rolling radius. The wear can be inferred from how long time the tyre has been in use, how much weight that has been placed on the tyre, the road surfaces that have been traversed, the amount of lateral force generated by the tyre, and so on.

Thus, it is understood that the mapping between operating state of the heavy-duty vehicle 100 and effective rolling radius $R_E$ of the wheel 102 can be a one-dimensional mapping where vehicle state only comprises a single parameter such as weight, or a multi-dimensional mapping where vehicle state comprises more than one parameter. In both cases, a vehicle state can be mapped to an effective rolling radius $R_E$ of the wheel 102. This rolling radius effectively represents an a-priori estimate of effective wheel rolling radius, which is the best guess available before any measurement data has been obtained, such as travelled distance in relation to wheel rotations, or vehicle acceleration in relation to wheel angular acceleration. The algorithm is then executed until convergence, whereupon an a-posteriori estimate of effective rolling radius $R_E$ is obtained. This a-posteriori estimate is then used to update the mapping, and the method may then proceed in an iterative manner to refine the information on both a-priori estimated and a-posteriori estimated effective rolling radius.

The data on effective rolling radius $R_E$ of the wheel 102 obtained from the mapping in dependence of the current vehicle state is used to initialize an algorithm designed to determine effective rolling radius. The better the mapping becomes, the smaller the difference between the initialization radius and the final radius obtained from the algorithm upon convergence, which also translates into a reduced latency from start of algorithm execution to convergence, which is the primary reasons or implementing the methods discussed herein. The algorithm S31, may, as mentioned above, be at least partly based on an acceleration of the vehicle obtained from an IMU and on an angular acceleration of the wheel obtained from a wheel speed sensor of the heavy-duty vehicle 100. Alternatively, or as a complement, the algorithm S32 can be at least partly based on a travelled distance obtained from a global positioning system, GPS, and/or from geographic data, in relation to a number of wheel rotations obtained from a wheel speed sensor of the heavy-duty vehicle 100.

The mapping may, at least initially, not comprise a full representation of all possible vehicle states, especially if more than one vehicle state variable is considered in the mapping. In other words, the mapping may lack data on effective rolling radius for some vehicle states. To alleviate issues with incomplete mappings, the method optionally comprises initializing S33 the algorithm using interpolation between two or more entries in the mapping. This may for instance entail selecting the two closest vehicle states in the mapping on either side of the current vehicle state, and interpolating in-between the entries in the mapping based on some form of distance metric to the vehicle state entry or other form of weighting. For instance, if the vehicle state in the mapping is vehicle weight, and the mapping contains effective rolling radius data for vehicle states $w_1$ and $w_2$, where $w_1 < w_2$, and the current vehicle state is $w_3$, where $w_1 < w_3 < w_2$, then the effective rolling radius for weight $w_3$ may be obtained as

$$R_E(w_3) = \frac{a_1 R_E(w_1) + a_2 R_E(w_2)}{a_1 + a_2}$$

where $a_1$ and $a_2$ are interpolation weights, selected, e.g., as function of the corresponding distances $w_3$ - $w_1$ and $w_2$ - $w_3$. Interpolation can be formed in a number of known ways, and may of course also be performed if the mapping is multi-dimensional, i.e., if the vehicle state comprises more than one parameter. The algorithm convergence criteria may differ from implementation to implementation. The algorithm S41 convergence criterion may for instance comprise a condition on rate of change in the estimated effective rolling radius $R_E$. Thus, the current best estimate of tyre rolling radius output from the algorithm is monitored, and when this output value no longer changes by more than some acceptable amount, then convergence is declared. It is noted that the algorithm does not have to be stopped once convergence has been declared. Rather, the algorithm can be kept running indefinitely since the longer it is allowed to execute the better the estimate normally becomes, although the rate of improvement over time eventually becomes very small. However, it will normally be required that some form of convergence criterion is reached before the mapping is updated, in order not to introduce corrupt data into the mapping 410.

If the current vehicle state is outside of the vehicles states in the mapping, i.e., below the smallest vehicle state value or above the largest, (outside of the convex hull of the existing vehicles states in a multi-dimensional mapping) then extrapolation can be used instead. Various extrapolation techniques can be used, such as linear extrapolation or extrapolation involving also higher order terms.

The convergence criterion S42 associated with the algorithm may also comprise just a condition on execution time of the algorithm. In other words, the algorithm is initialized, and then left to execute for a pre-determined period of time, following which convergence is declared regardless of the output characteristics of the algorithm. This type o convergence criterion is relatively robust and also not associated with any significant computational burden, which is an advantage.

The updating S43 of the mapping may comprise replacing an entry in the mapping associated with the current vehicle operating state by a weighted combination of the entry and the estimated effective rolling radius $R_E$. Thus, over time, the entries in the mapping are gradually refined until the mapping becomes an accurate representation of how vehicle operating state influences the effective wheel rolling radius. The weights used in the update can be determined in many different ways, for instance using a recursive least squares approach, or some form of ad-hoc weighting scheme. The weights can also be binary, i.e., zero or one, where a weight of one means that the updating S44 of the mapping comprises replacing an entry in the mapping associated with the current vehicle operating state by the estimated effective rolling radius $R_E$.

According to some aspects, the method also comprises monitoring vehicle operating state, and re-initializing S5 the algorithm based on new current vehicle operating state and on the mapping in response to detecting a change in vehicle operating state. This optional feature means that the system continuously or at least periodically looks for changes in vehicle operating state. If a large enough change in vehicle operating state is detected, then the algorithm is re-initialized. Consider for instance a vehicle used for transporting material from an excavation site to a deposit site over an extended period of time involving many trips back and forth. This vehicle will have a relatively large weight when travelling to the deposit site, and a smaller weight as it travels back to the excavation site. The effective wheel rolling radius is therefore likely to differ on the two legs of the transport mission. By the present method, the loading and unloading of the vehicle will be detected as a change in vehicle operating conditions, and the algorithm for estimation of effective wheel rolling radius will be re-initialized each time the load changes. Evenually the mapping will likely become so accurate such that no estimation is required, but the algorithm will still track more long-term effects from, e.g., tyre aging, tyre wear, and the like.

Figure 3 illustrates an example vehicle control function architecture 300 applicable with the herein disclosed methods. In this example vehicle control structure, a traffic situation management (TSM) function 310 plans driving operation with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles and curvature profiles which describe a desired target vehicle velocity in the vehicle forward direction and turning to be maintained for a given maneuver. The TSM function continuously requests 145 the desired acceleration profiles $a_{req}$ and steering angles $\delta$ (or curvature profiles $c_{req}$) from the VMM function 140 which performs force allocation to meet the requests from the TSM function in a safe and robust manner. The VMM function 140 operates on a timescale of below one second or so. The VMM function 140 then communicates with the different MSD control units 130 on the vehicle via the different MSD interfaces 135. The communication on the interface 135 may involve, e.g., transmission of wheel slip set-points $\lambda_i$, target torque set-points $T_i$, and/or wheel speeds $\omega_i$, to the different MSD control units 130 and reception of capability and status signals from the MSD control unit 130. Target steering angles $\delta_i$ and/or associated steering angle limits $\delta_{lim}$ can also be communicated over the interface 135.

In this example architecture 300, the TSM function 310 generates vehicle motion requests 145, which may comprise a desired steering angle $\delta$ or an equivalent curvature $c_{req}$ to be followed by the vehicle, and which may also comprise desired vehicle unit accelerations $a_{req}$ and also other types of vehicle motion requests, which together describe a desired motion by the vehicle along a desired path at a desired velocity profile. It is understood that the motion requests can be used as base for determining or predicting a required amount of longitudinal and lateral forces which needs to be generated in order to successfully complete a maneuver. The TSM function 310 can of course also be replaced by driver input signals, from a steering wheel and pedals.

The VMM system operates with a time horizon of about 1 second or so, and continuously transforms the acceleration profiles $a_{req}$ and curvature profiles $c_{req}$ from the TSM function 310 into control commands for controlling vehicle motion functions, actuated by the different MSDs of the vehicle 100, that in turn report back respective capabilities to the VMM function 140. The capabilities can then be used as constraints in the vehicle control. The VMM system performs vehicle state or motion estimation, by a motion estimation function 320. This motion estimation results in an estimated vehicle state s comprising, e.g., positions, speeds, accelerations, and articulation angles of the different units in the vehicle combination by monitoring operations using various sensors 350 arranged on the vehicle 100, often but not always in connection to the MSDs. An important input to the motion estimation function 320 are the signals from IMU 110 and the wheel speed sensors 106 on the heavy duty vehicle 100. The motion estimation function 320 is, as discussed above, configured to estimate at least vehicle speed over ground, based on the wheel speed signal from the wheel speed sensors 106 and also on the IMU signal from the IMU 110.

The result of the motion estimation 320, i.e., the estimated vehicle state s, is input to a force generation module 330 which determines the required global forces $\mathbf{V}=[V_1, V_2]$ for the different vehicle units to cause the vehicle 100 to move according to the requested acceleration and curvature profiles $a_{req}$, $c_{req}$, and to behave according to the desired vehicle behavior. The required global force vector $\mathbf{V}$ is input to an MSD coordination function 340 which allocates wheel forces and coordinates other MSDs such as steering and suspension. The MSD coordination function outputs an MSD control allocation for the i:th wheel, which may comprise any of a torque $T_i$, a longitudinal wheel slip $\lambda_i$, a wheel rotational speed $\omega_i$, and/or a wheel steering angle $\delta_i$. The coordinated MSDs then together provide the desired lateral Fy and longitudinal Fx forces on the vehicle units, as well as the required moments Mz, to obtain the desired motion by the vehicle combination 100.

The motion estimation function 320 is optionally also arranged to generate a free-rolling request 325 and send it to the MSD coordination function 340. This free-rolling request triggers a reduction in wheel slip of one or more wheels, which may improve the accuracy in some tyre radius estimation algorithms, such as algorithms which are based on wheel speed data in combination with IMU data on acceleration.

The example VMM function 140 in Figure 3 manages both force generation and MSD coordination, i.e., it determines what forces that are required at the vehicle units in order to fulfil the requests from the TSM function 310, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 310.

The MSD coordination function 340 may implement a mathematical optimization routine which finds an MSD force allocation that corresponds to the required global forces determined by the force generation module 330. The mathematical optimization routine involves constraints, which are limits on the forces possible to generate by a given MSD. Thus, the MSD coordination function 340 can be used to reduce or even remove the wheel slip on one or more wheels 102, which facilitates a more accurate determination of vehicle speed using wheel speed sensors 106, which could be useful when estimating the effective wheel rolling radius. The constraints may be imposed as a wheel slip limit or as a torque limit, which can be set to some small value or even to a zero value where the wheel is essentially in free-rolling state.

The MSD coordination function 340 is optionally configured to coordinate actuation of the plurality of MSDs of the heavy-duty vehicle based on the solution to a constrained optimization problem, where one or more constraints of the constrained optimization problem is arranged to be configured in dependence of an estimated error magnitude associated with a vehicle speed over ground based on the IMU signal. This means that the MSD coordination function 340 can simply solve the optimization problem under the constraints that allocated wheel slips at one or more wheels of the heavy-duty vehicle should be kept below some threshold, or even be set to zero, in order to reset the IMU integrator error and enable continued reliable estimation of vehicle speed over ground.

The VMM function 140 in Figure 3 comprises a rolling radius estimation function 360 and a vehicle state estimation function 370. These two functions together provide accurate data on current effective wheel rolling radius $R_E$ of the wheels 102 on the vehicle 100 using the methods discussed above. The rolling radius estimation function 360 maintains the mapping 410 between vehicle operating state of the heavy-duty vehicle 100 and effective rolling radius $R_E$ of the wheel 102. The current vehicle operating state of the heavy-duty vehicle is determined at least in part by the vehicle state estimation function 370 using input data from the sensors 350. Thus, the rolling radius estimation function 360 is able to initialize the algorithm 420 for estimating the effective rolling radius of the wheel 102 based on the current vehicle operating state and on the mapping. Once the algorithm converges, i.e., upon the algorithm reaching a convergence criterion, the mapping is updated based on the estimated effective rolling radius.

The a-posteriori estimate of effective rolling radius $R_E$ is then output to the motion estimation function 320 and also the MSD coordination function 340 which may have use of this data in determining current vehicle motion and perhaps more importantly in trying to predict future motion of the vehicle, e.g., in response to an applied torque at one or more wheels of the heavy-duty vehicle 100. The tyre radius information is of course also central when wheel slip is to be determined.

According to some aspects, the rolling radius estimation function 360 may also output reliability information associated with the a-posteriori estimate of effective rolling radius $R_E$. This reliability information may, for instance, indicate if convergence has been obtained or if the algorithm is still working on generating a new estimate of effective rolling radius, perhaps after having been re-initialized due to a detected change in vehicle operating state. The reliability information may also at least in part be based on data noted in the mapping. This data can be configured based on pre-deployment analysis such as computer simulation and practical experimentation.

Figure 5 schematically illustrates, in terms of a number of functional units, the components of a control unit 500 according to embodiments of the discussions herein, such as any of the MSD control units 130 or the VMM function 140. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA. Particularly, the processing circuitry 510 is configured to cause the control unit 500 to perform a set of operations, or steps, such as the methods discussed in connection to Figure 4A and 4B and generally herein. For example, the storage medium 520 may store the set of operations, and the processing circuitry 510 may be configured to retrieve the set of operations from the storage medium 520 to cause the control unit 500 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 500 may further comprise an interface 530 for communications with at least one external device. As such the interface 530 may comprise one or more transmitters and receivers, comprising analogue and digital components and a suitable number of ports for wireline or wireless communication.

The processing circuitry 510 controls the general operation of the control unit 500, e.g., by sending data and control signals to the interface 530 and the storage medium 520, by receiving data and reports from the interface 530, and by retrieving data and instructions from the storage medium 520. Other components, as well as the related functionality, of the control node are omitted in order not to obscure the concepts presented herein.

Figure 6 illustrates a computer readable medium 610 carrying a computer program comprising program code means 620 for performing the methods illustrated in Figure 4A and 4B and the techniques discussed herein, when said program product is run on a computer. The computer readable medium and the code means may together form a computer program product 600.

## Claims

1. A method for determining an effective rolling radius $(R_E)$ of a wheel (102) mounted on a heavy-duty vehicle (100), the method comprising obtaining (S1) a mapping (410) between a vehicle operating state of the heavy-duty vehicle (100) and an effective rolling radius $(R_E)$ of the wheel (102), wherein the mapping (410) is associated (S11) with a type of the heavy-duty vehicle (100),

    determining (S2) a current vehicle operating state of the heavy-duty vehicle (100),
    initializing (S3) an algorithm (420) for estimating effective rolling radius $(R_E)$ of the wheel (102) based on the current vehicle operating state and on the mapping (410),
    and, upon the algorithm (420) reaching a convergence criterion,
    updating (S4) the mapping (410) based on the estimated effective rolling radius $(R_E)$.

2. The method according to claim 1, wherein the mapping (410) is a vehicle specific mapping (S12).

3. The method according to any previous claim, wherein vehicle operating state comprises a current vehicle weight (S21).

4. The method according to any previous claim, wherein vehicle operating state comprises one or more tyre properties of the wheel (S22).

5. The method according to any previous claim, where the algorithm (420) is at least partly based on an acceleration of the vehicle obtained from an inertial measurement unit, IMU, and on an angular acceleration of the wheel obtained from a wheel speed sensor of the heavy-duty vehicle (S31).

6. The method according to any previous claim, where the algorithm (420) is at least partly based on a travelled distance obtained from a global positioning system, GPS, and/or from geographic data, in relation to a number of wheel rotations obtained from a wheel speed sensor of the heavy-duty vehicle (S32).

7. The method according to any previous claim, comprising initializing (S33) the algorithm using interpolation between two or more entries in the mapping.

8. The method according to any previous claim, where the algorithm (420) convergence criterion comprises a condition on rate of change in the estimated effective rolling radius (S41).

9. The method according to any previous claim, where the algorithm (420) convergence criterion comprises a condition on execution time of the algorithm (S42).

10. The method according to any previous claim, where the updating (S43) of the mapping (410) comprises replacing an entry in the mapping (410) associated with the current vehicle operating state by a weighted combination of the entry and the estimated effective rolling radius ($R_E$).

11. The method according to any previous claim, where the updating (S44) of the mapping (410) comprises replacing an entry in the mapping (410) associated with the current vehicle operating state by the estimated effective rolling radius ($R_E$).

12. The method according to any previous claim, further comprising monitoring vehicle operating state, and re-initializing (S5) the algorithm (420) based on new current vehicle operating state and on the mapping (410) in response to detecting a change in vehicle operating state.

13. A control unit (130, 140, 500) comprising processing circuitry (510) configured to perform the method of any of claims 1-14.

14. A heavy-duty vehicle (100) comprising the control unit (130, 140, 500) according to claim 13.

15. A computer program (620) comprising program code means which perform the method of any of claims 1-12 when said program is run on a computer or on processing circuitry (510) of a control unit (130, 140, 500).

**Patentansprüche**

1. Verfahren zur Bestimmung eines effektiven Rollradius ($R_E$) eines Rads (102), das an einem Schwerlastfahrzeug (100) montiert ist, das Verfahren umfassend

   Erlangen (S1) einer Zuordnung (410) zwischen einem Fahrzeugbetriebszustand des Schwerlastfahrzeugs (100) und einem effektiven Rollradius ($R_E$) des Rads (102), wobei die Zuordnung (410) mit einem Typ des Schwerlastfahrzeugs (100) assoziiert ist (S11),
   Bestimmen (S2) eines aktuellen Betriebszustands des Schwerlastfahrzeugs (100),
   Initialisieren (S3) eines Algorithmus (420) zum Schätzen eines effektiven Rollradius ($R_E$) des Rads (102) basierend auf dem aktuellen Fahrzeugbetriebszustand und der Zuordnung (410), und, wenn der Algorithmus (420) ein Konvergenzkriterium erreicht, Aktualisieren (S4) der Zuordnung (410) basierend auf dem geschätzten effektiven Rollradius ($R_E$).

2. Verfahren nach Anspruch 1, wobei das Zuordnen (410) ein fahrzeugspezifisches Zuordnen ist (S12).

3. Verfahren nach einem vorherigen Anspruch, wobei der Betriebszustand des Fahrzeugs ein aktuelles Fahrzeuggewicht umfasst (S21).

4. Verfahren nach einem vorherigen Anspruch, wobei der Betriebszustand des Fahrzeugs eine oder mehrere Reifeneigenschaften des Rads (S22) umfasst.

5. Verfahren nach einem vorherigen Anspruch, wobei der Algorithmus (420) zumindest teilweise auf einer Beschleunigung des Fahrzeugs, die von einer Trägheitsmesseinheit (IMU) erlangt wird, und auf einer Winkelbeschleunigung des Rads, die von einem Raddrehzahlsensor des Schwerlastfahrzeugs (S31) erlangt wird, basiert ist.

6. Verfahren nach einem vorherigen Anspruch, wobei der Algorithmus (420) zumindest teilweise auf einer aus einem globalen Positionierungssystem (GPS) und/oder aus geografischen Daten gewonnenen zurückgelegten Strecke basiert, bezogen auf eine Anzahl von Radumdrehungen, welche von einem Raddrehzahlsensor des Schwerlastfahrzeugs (S32) erlangt werden.

7. Verfahren nach einem vorherigen Anspruch, umfassend ein Initialisieren (S33) des Algorithmus durch Interpolation zwischen zwei oder mehr Einträgen in der Zuordnung.

8. Verfahren nach einem vorherigen Anspruch, wobei das Konvergenzkriterium des Algorithmus (420) eine Bedingung für die Änderungsrate des geschätzten effektiven Rollradius umfasst (S41).

9. Verfahren nach einem vorherigen Anspruch, wobei das Konvergenzkriterium des Algorithmus (420) eine Bedingung für eine Ausführungszeit des Algorithmus umfasst (S42).

10. Verfahren nach einem vorherigen Anspruch, wobei das Aktualisieren (S43) der Zuordnung (410) ein Ersetzen eines Eintrags in der Zuordnung (410), der mit dem aktuellen Fahrzeugbetriebszustand assoziiert ist, durch eine gewichtete Kombination aus dem Eintrag und dem geschätzten effektiven Rollradius ($R_E$) umfasst.

11. Verfahren nach einem vorherigen Anspruch, wobei das Aktualisieren (S44) der Zuordnung (410) ein Ersetzen eines Eintrags in der Zuordnung (410), der mit dem aktuellen Fahrzeugbetriebszustand assoziiert ist, durch den geschätzten effektiven Rollradius ($R_E$) umfasst.

12. Verfahren nach einem vorherigen Anspruch, ferner umfassend ein Überwachen des Fahrzeugbetriebszustands und Neuinitialisieren (S5) des Algorithmus (420) basierend auf dem neuen aktuellen Betriebszustand des Fahrzeugs und der Zuordnung (410) als Reaktion auf ein Erfassen einer Änderung des Fahrzeugbetriebszustands.

13. Steuereinheit (130, 140, 500), umfassend Verarbeitungsschaltung (510), die konfiguriert ist, um das Verfahren nach einem der Ansprüche 1-14 durchzuführen.

14. Fahrzeug (100), umfassend eine Steuereinheit (130, 140, 500) nach Anspruch 13.

15. Computerprogramm (620), umfassend Programmcodeeinrichtungen, die das Verfahren nach einem der Ansprüche 1-12 durchführen, wenn das Programm auf einem Computer oder einer Verarbeitungsschaltung (510) einer Steuereinheit (130, 140, 500) läuft.

**Revendications**

1. Procédé de détermination d'un rayon de roulement effectif (Re) d'une roue (102) montée sur un véhicule utilitaire lourd (100), le procédé comprenant l'obtention (S1) d'un mappage (410) entre un état de fonctionnement de véhicule du véhicule utilitaire lourd (100) et un rayon de roulement effectif (Re) de la roue (102), dans lequel le mappage (410) est associé (S11) à un type de véhicule utilitaire lourd (100),

la détermination (S2) d'un état de fonctionnement de véhicule actuel du véhicule utilitaire lourd (100),
l'initialisation (S3) d'un algorithme (420) pour l'estimation du rayon de roulement effectif (Re) de la roue (102) sur la base de l'état de fonctionnement de véhicule actuel et du mappage (410),
et, lorsque l'algorithme (420) atteint un critère de convergence,
la mise à jour (S4) du mappage (410) sur la base du rayon de roulement effectif (Re) estimé.

2. Procédé selon la revendication 1, dans lequel le mappage (410) est un mappage spécifique du véhicule (S12).

3. Procédé selon l'une quelconque des revendications précédentes, dans lequel l'état de fonctionnement de véhicule comprend un poids de véhicule actuel (S21).

4. Procédé selon l'une quelconque des revendications précédentes, dans lequel l'état de fonctionnement de véhicule comprend une ou plusieurs propriétés de pneu de la roue (S22).

5. Procédé selon l'une quelconque des revendications précédentes, dans lequel l'algorithme (420) est au moins partiellement fondé sur une accélération du véhicule obtenue à partir d'une unité de mesure inertielle, IMU, et sur une accélération angulaire de la roue obtenue à partir d'un capteur de vitesse de roue du véhicule utilitaire lourd (S31).

6. Procédé selon l'une quelconque des revendications précédentes, dans lequel l'algorithme (420) est au moins partiellement fondé sur une distance parcourue obtenue à partir d'un système de positionnement global, GPS, et/ou de données géographiques, en relation avec un nombre de rotations de roue obtenu à partir d'un capteur de vitesse de roue du véhicule utilitaire lourd (S32).

7. Procédé selon l'une quelconque des revendications précédentes, comprenant l'initialisation (S33) de l'algorithme à l'aide d'une interpolation entre deux entrées ou plus du mappage.

8. Procédé selon l'une quelconque des revendications précédentes, dans lequel le critère de convergence de l'algorithme (420) comprend une condition relative au taux de variation du rayon de roulement effectif estimé (S41).

9. Procédé selon l'une quelconque des revendications précédentes, dans lequel le critère de convergence de l'algorithme (420) comprend une condition relative au temps d'exécution de l'algorithme (S42).

10. Procédé selon l'une quelconque des revendications précédentes, dans lequel la mise à jour (S43) du mappage (410) comprend le remplacement d'une entrée du mappage (410) associée à l'état de fonctionnement de véhicule actuel par une combinaison pondérée de l'entrée et du rayon de roulement effectif (Re) estimé.

11. Procédé selon l'une quelconque des revendications précédentes, dans lequel la mise à jour (S44) du mappage (410) comprend le remplacement d'une entrée du mappage (410) associée à l'état de fonctionnement de véhicule actuel par le rayon de roulement effectif ($R_E$) estimé.

12. Procédé selon l'une quelconque des revendications précédentes, comprenant en outre la surveillance de l'état de fonctionnement de véhicule, et la réinitialisation (S5) de l'algorithme (420) sur la base du nouvel état de fonctionnement de véhicule actuel et du mappage (410) en réponse à la détection d'un changement de l'état de fonctionnement de véhicule.

13. Unité de commande (130, 140, 500) comprenant un circuit de traitement (510) configuré pour réaliser le procédé selon l'une quelconque des revendications 1 à 14.

14. Véhicule utilitaire lourd (100) comprenant l'unité de commande (130, 140, 500) selon la revendication 13.

15. Programme informatique (620) comprenant des moyens de code de programme qui réalisent le procédé selon l'une quelconque des revendications 1 à 12 lorsque ledit programme est exécuté sur un ordinateur ou sur un circuit de traitement (510) d'une unité de commande (130, 140, 500).

FIG. 1

FIG. 2

FIG. 3

FIG. 4A

FIG. 4B

FIG.5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017215751 A1
- WO 2021144010 A1

- DE 102017116248 A1

**Non-patent literature cited in the description**

- **HANS PACEJKA**. Tyre and vehicle dynamics. Elsevier Ltd., 2012